# EUROPÄISCHE PATENTSCHRIFT

(11) **EP 2 572 853 B1**
(45) Veröffentlichungstag und Bekanntmachung des Hinweises auf die Patenterteilung: **01.08.2018**
(21) Anmeldenummer: 12186092.8
(22) Anmeldetag: 26.09.2012
(51) Int. Cl.: B29C 35/02, B29C 70/54, B29C 70/44

(54) **Steuerung eines Autoklaven-Fertigungsprozesses**
Control of an autoclave production process
Commande d'un procédé de finition d'autoclave

(30) Priorität: 26.09.2011 DE 102011053921
(43) Veröffentlichungstag der Anmeldung: 27.03.2013
(73) Patentinhaber: Deutsches Zentrum für Luft- und Raumfahrt e.V., 51147 Köln (DE)
(72) Erfinder: Ucan, Hakan, 21680 Stade (DE); Liebers, Nico, 38102 Braunschweig (DE); Kühn, Michael, 21723 Hollern-Twielenfleth (DE); Bölke, Jens, 21680 Stade (DE); Meyer, Matthias, 73033 Göppingen (DE)
(74) Vertreter: Aisch, Sebastian

(56) Entgegenhaltungen:
- EP-A1- 0 542 508
- EP-A1- 1 777 993
- US-A- 4 515 545
- US-A1- 2008 175 753

## Beschreibung

Die Erfindung betrifft ein Verfahren zur Steuerung eines Autoklaven-Fertigungsprozesses zur Herstellung eines Faserverbundbauteils in einem Autoklaven mit Einbringen eines Bauteils in einen Autoklaven und Starten des Autoklaven-Fertigungsprozesses mit vorgegebenen Steuerungswerten von Autoklaven-Steuerungsparametern. Die Erfindung betrifft auch eine Fertigungsanlage hierzu mit einem Autoklaven.

Faserverbundbauteile werden in der Regel aus einem Fasermaterial als strukturbildenden Werkstoff und einem Matrixsystem, wie beispielsweise ein Harz, hergestellt. Verbindet sich das Fasermaterial mit dem Matrixharz, so entstehen äußerst stabile Bauteile, die gegenüber vergleichbaren Materialien ein erheblich geringeres Gewicht aufweisen.

Eine Herstellungsart derartiger Bauteile ist dabei der Autoklaven-Fertigungsprozess. Ein Autoklav ist ein druckdichter Ofen, der mit hohen Temperaturen und Drücken beaufschlagt werden kann. Das getränkte oder ungetränkte Fasergelege wird in einem solchen Autoklaven eingebracht, wobei durch die anschließende Temperatur- und Druckbeaufschlagung, die je nach Matrixharz zwischen 100° bis 300° C und zwischen 3 und 20 bar liegen kann, das fertige Bauteil durch Polymerisation bzw. Aushärtung des Matrixharzes gebildet wird. Nicht selten befindet sich ein derartiges ungetränktes Fasergelege in einem vakuumdichten Werkzeugaufbau, so dass aufgrund der Druckdifferenz zunächst das Fasergelege von dem Matrixharz infiltriert wird und anschließend der eigentliche Aushärtvorgang mit dem Autoklaven durchgeführt wird.

Der eigentliche Aushärt- bzw. Polymerisationsvorgang in dem Autoklaven erfolgt dabei anhand eines vorgegebenen Temperatur-Druck-Zeitverlaufes. Aufgrund der Tatsache, dass die Herstellung derartiger Faserverbundbauteile, insbesondere in der Serienproduktion, durch die Beeinflussung einer Vielzahl von Faktoren großen Schwankungen unterliegt, wird der Fertigungsprozess in der Regel mit sehr hohen Sicherheitsfaktoren beaufschlagt, was zu Lasten der Produktivität geht. Dadurch kann das Risiko von Fehlstellen und vermindernder Bauteilqualität zwar reduziert werden, allerdings wird dadurch der Fertigungsprozess an sich kostenintensiver, was der Verbreitung derartiger Bauteile entgegensteht.

Ein weiterer Nachteil bei derartigen Autoklaven-Fertigungsprozessen besteht darin, dass die eigentliche Bauteilqualität erst im Anschluss an den gesamten Fertigungsprozess beurteilt werden kann. So kommt es nicht selten vor, dass aufgrund einer größeren ungetränkten Faserstelle das Bauteil bereits zu Beginn des Fertigungsprozesses eine so mindere Qualität aufweist, dass es später aussortiert werden muss. Da jedoch geeignete Mechanismen fehlen, dies rechtzeitig festzustellen, durchläuft das Bauteil den gesamten Autoklav-Fertigungsprozess, bis anschließend festgestellt werden muss, dass das Bauteil auszusortieren ist. Dadurch werden hohe Kapazitäten gebunden, welche sich ebenfalls erheblich negativ auf die Kostenstrukturen derartiger Fertigungsprozesse auswirken.

Aus der EP 0 542 508 A1 ist ein Verfahren zur Herstellung eines Faserverbundbauteils bekannt, bei dem entsprechende Prozessparameter mit Hilfe von Sensoren erfasst und dann mit einer entsprechenden Prozesssignatur verglichen werden, um Abweichungen feststellen zu können.

Aus der US 4,515,545 ist ebenfalls ein Herstellungsverfahren für Faserverbundbauteile bekannt, bei dem lediglich Prozessparameter des Herstellungsprozesses gemessen werden und anschließend mit einer entsprechenden Regelung verglichen werden, so dass ein Temperatur-Druck-Verlauf innerhalb eines vordefinierten Korridors verläuft. Es ist daher Aufgabe der vorliegenden Erfindung, ein verbessertes Verfahren und eine verbesserte Fertigungsanlage anzugeben mit der die Bauteilqualität von Faserverbundbauteilen erhöht und gleichzeitig die Produktivitätsfaktoren, insbesondere bei der Serienproduktion, optimiert werden können. Darüber hinaus ist es insbesondere eine Aufgabe der vorliegenden Erfindung, bei der Serienproduktion sicherzustellen, dass die herzustellenden Bauteile einer wiederholbaren und sichergestellten Qualität genügen.

Die Aufgabe wird mit dem Verfahren der eingangs genannten Art erfindungsgemäß gelöst durch die Schritte:
b1) Erfassen von Daten bezüglich einer Mehrzahl von Prozess- und/oder Bauteilparametern des Fertigungsprozesses und des in den Autoklaven eingebrachten Bauteils durch ein Sensorsystem,
b2) Ermitteln von Daten bezüglich mindestens eines nicht erfassten Prozess- und/oder Bauteilparameters des in den Autoklaven eingebrachten Bauteils durch eine numerische Autoklavsimulation, die als numerische Eingangsgrößen durch das Sensorsystem erfasste Daten von zumindest einem Teil der Prozess- und/oder Bauteilparameter erhält, mittels einer Simulationseinheit (6)
c)- Ermitteln eines Bauteilzustandes des in dem Autoklaven befindlichen Bauteils in Abhängigkeit von einer Korrelation der Daten durch eine mit dem Sensorsystem kommunizierende Steuerungseinheit, und
d) Steuerung des Autoklaven-Fertigungsprozesses in Abhängigkeit von dem ermittelten Bauteilzustand durch die Steuerungseinheit.

Es wird erfindungsgemäß ein Verfahren zur Steuerung eines Autoklaven-Fertigungsprozesses zur Herstellung eines Faserverbundbauteils in einem Autoklaven angegeben, bei dem permanent Daten bezüglich von Prozess- und/oder Bauteilparametern erfasst werden. Solche Parameter können beispielsweise die Luftströmung, der Wärmetransport, der Grad der Polymerisation, die Temperatur des Bauteils, der Druck, sowie Messungen des Vakuums und seiner Dichtigkeit sein. Hierfür können beispielsweise Sensoren des Sensorsystems verwendet werden, die zum Erfassen derartiger Parameter geeignet sind, wie beispielsweise Thermoelement, Thermokameras, Ultraschallsensoren, dielektrische Sensoren und dergleichen.

Diese erfassten Daten werden nun einer Steuerungseinheit zugeführt, die anhand dieser Daten einen aktuellen Bauteilzustand des in dem Autoklaven befindlichen Faserverbundbauteils in Abhängigkeit von einer Korrelation der Daten ermittelt. Denn durch die Korrelation der Daten, beispielsweise basierend auf entsprechenden Erfahrungswerten, kann der Zustand des in dem Autoklaven befindlichen Bauteils kontinuierlich ermittelt werden, so dass sich eine Verschlechterung der Bauteilqualität bereits während des Fertigungsprozesses zeigt und nicht erst später.

Als Beispiel für eine derartige Korrelation sei erwähnt, dass bestimmte Kombinationen von Daten mit einer gewissen Wahrscheinlichkeit dazu führen, dass das Bauteil qualitätsbedingt ausgesondert werden muss. Übersteigt beispielsweise die Temperatur des Bauteils während des Fertigungsprozesses zumindest für einen gewissen Zeitraum einen bestimmten Schwellwert nicht, so kann mit einer hinreichenden Wahrscheinlichkeit vorausgesagt werden, dass die Polymerreaktion nicht vollständig abgeschlossen ist, so dass das Bauteil nicht fertig ausgehärtet wurde. Auf der anderen Seite kann jedoch festgestellt werden, dass das Bauteil seiner gewünschten Qualität genügt, wenn die Temperatur des Bauteils für einen gewissen Zeitraum zumindest dem gesetzten Schwellwert übersteigt, so dass das Matrixharz vollständig ausgehärtet ist, so dass auf die Verwendung von großen Sicherheitsfaktoren verzichtet werden kann, was zu einer Erhöhung der Produktivität führt.

Die Steuerungseinheit ist daher nun derart eingerichtet, dass sie in Abhängigkeit des ermittelten Bauteilszustandes den Autoklaven-Fertigungsprozess entsprechend steuert, um beispielsweise bei einer negativen Bauteilqualität entsprechend gegenzuwirken oder bei einer entsprechend positiven Bauteilqualität den Fertigungsprozess entsprechend zu verkürzen. Die Steuerungseinheit kann dabei eine übergeordnete Recheneinheit mit Steuerungsfunktionalitäten sein und kann bspw. mit der SPS (steuerprogrammierbaren Steuerung) des Autoklaven zur Ansteuerung verbunden sein.

Es wird somit eine dynamische Autoklaven-Steuerung angegeben, die letztendlich in Abhängigkeit des ermittelten Bauteilzustandes den Prozess so steuert, dass die Bauteilqualität einem vorgegebenen Wert genügt, und gleichzeitig der Prozess hinsichtlich der Produktivität optimiert wird. Wird während des Autoklaven-Fertigungsprozesses festgestellt, dass der Bauteilzustand derart schlecht ist, dass mit einer gewissen Wahrscheinlichkeit später die Bauteilqualität nicht den Anforderungen genügt, so kann der Autoklaven-Prozess auch vorzeitig beendet werden. Das Bauteil muss somit nicht den gesamten Fertigungsprozess durchlaufen, um dann später aufgrund mangelnder Qualität ausgesondert zu werden. Eine Erhöhung der Produktivitätszyklen hat dies zur Folge.

Vorteilhafter Weise erfolgt die Steuerung des Autoklaven-Fertigungsprozesses durch Anpassen der Steuerungswerte der Autoklaven-Steuerungsparameter in Abhängigkeit von dem ermittelten Bauteilzustand. Die Autoklaven-Steuerungsparameter können beispielsweise die Temperatur, der Druck und die Prozess- bzw. Zykluszeit sein. Denkbar ist aber auch, dass die Autoklaven-Steuerungsparameter entsprechende Verläufe von Parametern sind, wie beispielsweise der Temperatur-Druck-Zeitverlauf. Durch Anpassen dieser Steuerungswerte während des Fertigungsprozesses kann direkt auf die Bauteilqualität Einfluss genommen werden.

Dabei werden zusätzliche Daten von mindestens einem nicht erfassten Bauteilparameter des in den Autoklaven eingebrachten Bauteils aus einer numerischen Autoklavsimulation ermittelt. Als numerische Eingangsgrößen erhält die Autoklavsimulation erfasste Daten von zumindest einem Teil der Prozess- und/oder Bauteilparameter. Mit Hilfe eines solches virtuellen Autoklavmodells, welches den gesamten Autoklavprozess in einem realitätsnahen, echtzeitfähigen Modell wiedergeben kann und somit auf Basis der erfassten Daten den Prozessablauf zumindest teilweise vorhersagen kann, können Daten von Prozess- und/oder Bauteilparametern ermittelt werden, die mit Hilfe des Sensorsystems so nicht direkt messbar sind. Dadurch kann der vorhandene Datenpool mit derartigen, nicht messbaren Parametern erweitert werden, wodurch die Ermittlung des Bauteilszustandes wesentlich präziser erfolgen kann. Solche, aus einer numerischen Autoklavsimulation ermittelbaren Parameter können beispielsweise der Aushärtegrad, die Eigenspannung sowie die Schwindung etc. sein.

Vorteilhafter Weise werden die erfassten und/oder ermittelten Daten in einem Datenspeicher hinterlegt, insbesondere alle erfassten und/oder ermittelten Daten, damit sie beispielsweise für die spätere Verwendung zur Verfügung gestellt werden können. Mit Hilfe des Datenspeichers können dann beispielsweise Erfahrungswerte oder weitere Korrelationen abgeleitet werden, die dann als Basis für die dynamische Steuerung des Autoklavprozesses genutzt werden können.

So ist es beispielsweise besonders vorteilhaft, wenn bei einer Erkennung einer Abweichung während des Herstellungsprozesses zunächst in der Datenbank bzw. in dem Datenspeicher nach gleichen oder ähnlichen Abweichungs-Reaktions-Szenarien gesucht wird. So können die in dem Datenspeicher hinterlegten Steuerungswerte (z.B. Temperatur, Druck, Zykluszeit) bei einem ähnlichen Abweichungsszenario der ermittelten und/oder erfassten Daten und/oder des ermittelten Bauteilzustandes zur Ansteuerung des Autoklaven bei einem ähnlichen Abweichungsszenario der ermittelten und/oder erfassten Daten herangezogen werden. Der Vorteil liegt dabei in der kürzeren Zeitdauer zwischen der Feststellung der Abweichung und der eingeleiteten Reaktion.

Die Aufgabe wird im Übrigen auch mit einer Fertigungsanlage zur Herstellung eines Faserverbundbauteils in einem Autoklav-Fertigungsprozess der eingangs genannten Art gelöst durch
b1) ein Sensorsystem, das mittels Sensoren zum Erfassen von Daten bezüglich einer Mehrzahl von Prozess- und/oder Bauteilparametern des Fertigungsprozesses und dessen in Autoklaven eingebrachten Bauteils ausgebildet ist, und
b2) eine Simulationseinheit (6), die zum Ermitteln von Daten bezüglich mindestens eines nicht erfassten Prozess- und/oder Bauteilparameters des in den Autoklaven befindlichen Bauteils aus einer numerischen Autoklavsimulation, die als numerische Eingangsgrößen durch das Sensorsystem erfasste Daten von zumindest einem Teil der Prozess- und/oder Bauteilparameter erhält, eingerichtet ist, und
c) eine mit dem Sensorsystem kommunizierend verbundene Steuerungseinheit, die zum Ermitteln eines Bauteilzustandes des in den Autoklaven befindlichen Bauteils in Abhängigkeit von einer Korrelation der Daten und zum Steuern des Autoklaven-Fertigungsprozesses in Abhängigkeit von dem ermittelten Bauteilzustand eingerichtet ist.

Vorteilhafte Ausgestaltungen dieser Fertigungsanlage finden sich in den entsprechenden Unteransprüchen.

Die Erfindung wird anhand der beigefügten Figur beispielhaft näher erläutert. Es zeigt:

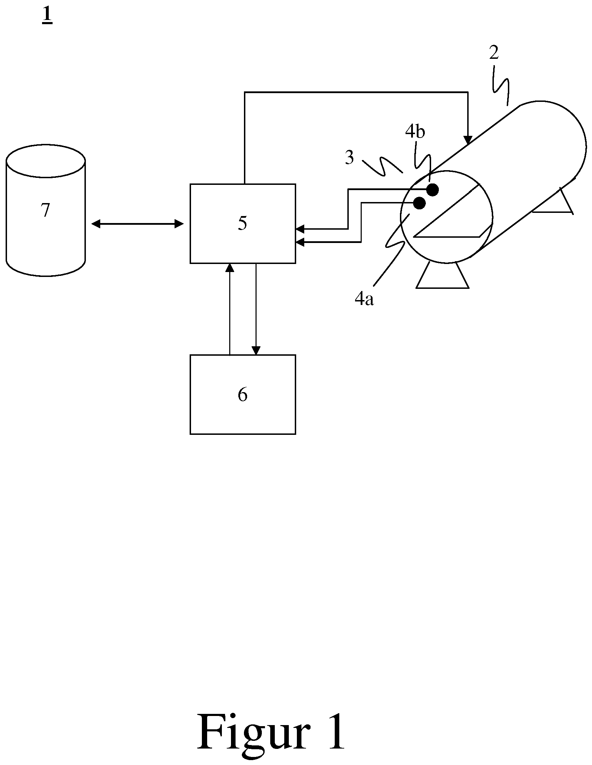

- Figur 1: - schematische Darstellung der erfindungsgemäßen Fertigungsanlage.

Figur 1 zeigt schematisch die erfindungsgemäße Fertigungsanlage 1 mit einem Autoklaven 2, in dem ein Faserverbundbauteil zur Herstellung eingebracht werden kann. Der Autoklav 2 ist druckdicht verschließbar und mit entsprechenden Temperaturen und Drücken beaufschlagbar.

Mit Hilfe eines Sensorsystems 3, das aus mehreren verschiedenen Sensoren 4a, 4b gebildet sein kann, werden kontinuierlich die Prozess- und/oder Bauteilparameter wie beispielsweise die Luftströmung, der Wärmetransport, die Polymerreaktion, Temperaturen, Druck, Bauteiltemperatur sowie Dichtigkeit des Vakuums usw. ermittelt. Die Anzahl sowie die Anordnung der Sensoren 4a, 4b ist in Figur 1 nur schematisch und zu Anschauungszwecken dargestellt.

Die von dem Sensorsystem 3 erfassten Daten der einzelnen Parameter werden dann einer Steuerungseinheit 5 zugeführt, welche die Daten korreliert und so den Bauteilzustand ermitteln kann. In Abhängigkeit des ermittelten Bauteilzustandes kann dann die Steuerungseinheit 5 auf den Autoklaven-Fertigungsprozess im Autoklaven 2 eingreifen, indem beispielsweise die Steuerungsparameter des Autoklaven 2 entsprechend angepasst werden, wie beispielsweise Temperatur, Druck und Zeitverlauf hierzu.

Um die Menge der für die Korrelation zugrunde gelegten Daten zu erhöhen, insbesondere jene, die nicht direkt über ein Sensorsystem erfassbar sind, wird mit Hilfe einer Simulationseinheit 6 eine numerische Autoklavsimulation durchgeführt, deren Eingangsgröße die von dem Sendesystem 3 erfassten Daten sind. Mit Hilfe eines solchen Autoklavmodells lässt sich der Autoklavprozess realitätsnah durch ein Modell wiedergeben, so dass andere Parameter, wie bespielsweise Schwindung, Eigenspannung oder Aushärtegrad, die nicht direkt messbar sind, mit Hilfe einer solchen Autoklavsimulation annäherungsweise berechnet werden können. Diese auf Grundlage der erfassten Daten ermittelten Daten durch die Autoklavsimulation 6 werden dann der Steuerungseinheit 5 ebenfalls zugeführt, so dass der Datenpool für die Grundlage der Korrelation vergrößert wird.

In einem Datenspeicher 7 werden während des gesamten Fertigungsprozesses die erfassten Daten eingeschrieben, so dass sie zu einem späteren Zeitpunkt wieder verwendbar sind oder als Erfahrungswerte einem neuen Fertigungsprozess zugrunde gelegt werden können.

Mit Hilfe des erfindungsgemäßen Verfahrens und der erfindungsgemäßen Fertigungsanlage wird es somit möglich, die im Autoklav stattfindenden Vorgänge derart transparent zu gestalten, dass sich die Prozesszeit verkürzt, Ausschuss erkannt und wenn Ausschuss nicht mehr auszuschließen ist, das Bauteil rechtzeitig aus dem Autoklav genommen werden kann. Es bedarf daher keiner hohen Sicherheitsfaktoren zu Lasten der Produktivität mehr, wodurch sich insbesondere bei Bauteilen der Serienproduktion die Zykluszeiten erhöhen lassen.

## Patentansprüche

1. Verfahren zur Steuerung eines Autoklaven-Fertigungsprozesses zur Herstellung eines Faserverbundbauteils in einem Autoklaven (2) mit
a) Einbringen eines Bauteils in einem Autoklaven (2) und starten des Autoklaven-Fertigungsprozesses mit vorgegebenen Steuerungswerten von Autoklaven-Steuerungsparametern,
b1) Erfassen von Daten bezüglich einer Mehrzahl von Prozess- und/oder Bauteilparametern des Fertigungsprozesses und des in dem Autoklaven (2) eingebrachten Bauteils durch ein Sensorsystem (3),
b2) Ermitteln von Daten bezüglich mindestens eines nicht erfassten Prozess- und/oder Bauteilparameters des in den Autoklaven eingebrachten Bauteils durch eine numerische Autoklavsimulation, die als numerische Eingangsgrößen durch das Sensorsystem erfasste Daten von zumindest einem Teil der Prozess- und/oder Bauteilparameter erhält, mittels einer Simulationseinheit (6)
c) Ermitteln eines Bauteilzustandes des in dem Autoklaven (2) befindlichen Bauteil in Abhängigkeit von einer Korrelation der Daten durch eine mit der im Sensorsystem (3) kommunizierend verbundene Steuerungseinheit (5), und
d) Steuerung des Autoklaven-Fertigungsprozesses in Abhängigkeit von dem ermittelten Bauteilzustand durch die Steuerungseinheit (5).

2. Verfahren nach einem der vorhergehenden Ansprüche, wobei der Autoklaven-Fertigungsprozess in Schritt d) durch Anpassen der Steuerungswerte der Autoklaven-Steuerungsparametern in Abhängigkeit von dem ermittelten Bauteilzustand gesteuert wird.

3. Verfahren nach einem der vorhergehenden Ansprüche, wobei während des Fertigungsprozesses erfasste und/oder ermittelte Daten sowie die korrespondierenden Steuerungswerte der Autoklaven-Steuerungsparameter in einem Datenspeicher (7) abgespeichert werden.

4. Verfahren nach einem der vorhergehenden Ansprüche, wobei Steuerungswerte der Autoklaven-Steuerungsparameter aus einer Mehrzahl von in einem Datenspeicher hinterlegten Steuerungswerten und korrespondierenden erfassten und/oder ermittelten Daten und/oder ermittelten Bauteilzustand in Abhängigkeit von den erfassten und/oder ermittelten Daten und/oder ermittelten Bauteilzustand ermittelt werden und der Autoklaven-Fertigungsprozess in Schritt d) in Abhängigkeit von den aus dem Datenspeicher ermittelten Steuerungswerten gesteuert wird.

5. Fertigungsanlage (1) zur Herstellung eines Faserverbundbauteils in einem Autoklaven-Fertigungsprozess mit
a) einem Autoklaven (2), der zum Aufnehmen eines Bauteils und zum Durchführen des Autoklaven-Fertigungsprozesses mit Steuerungswerten von Autoklaven-Steuerungsparametern eingerichtet ist,
b1) einem Sensorsystem (3), das mittels Sensoren (4a, 4b) zum Erfassen von Daten bezüglich einer Mehrzahl von Prozess- und/oder Bauteilparametern des Fertigungsprozesses und des in den Autoklaven eingebrachten Bauteils ausgebildet ist, und
b2) einer Simulationseinheit (6), die zum Ermitteln von Daten bezüglich mindestens eines nicht erfassten Prozess- und/oder Bauteilparameters des in den Autoklaven befindlichen Bauteils aus einer numerischen Autoklavsimulation, die als numerische Eingangsgrößen durch das Sensorsystem erfasste Daten von zumindest einem Teil der Prozess- und/oder Bauteilparameter erhält, eingerichtet ist, und
c) einer mit dem Sensorsystem (3) kommunizierend verbundene Steuerungseinheit (5), die zum Ermitteln eines Bauteilzustandes des in den Autoklaven (2) befindlichen Bauteils in Abhängigkeit von einer Korrelation der Daten und zum Steuern des Autoklaven-Fertigungsprozesses in Abhängigkeit von dem ermittelten Bauteilzustand eingerichtet ist.

6. Fertigungsanlage (1) nach Anspruch 5, wobei die Steuerungseinheit (5) zum Steuern des Autoklaven-Fertigungsprozesses durch Anpassen der Steuerungswerte der Autoklaven-Steuerungsparameter in Abhängigkeit von dem ermittelten Bauteilzustand eingerichtet ist.

7. Fertigungsanlage (1) nach einem der Ansprüche 5 oder 6, wobei ein Datenspeicher vorgesehen ist, der zum Hinterlegen der während des Fertigungsprozesses erfassten und/oder ermittelten Daten durch die Steuerungseinheit eingerichtet ist.

8. Fertigungsanlage (1) nach einem der Ansprüche 5 bis 7, wobei die Steuerungseinheit zum Ermitteln von Steuerungswerten der Autoklaven-Steuerungsparameter aus einer Mehrzahl von in einem Datenspeicher hinterlegten Steuerungswerten und korrespondierenden erfassten und/oder ermittelten Daten und/oder ermittelten Bauteilzustand in Abhängigkeit von den erfassten und/oder ermittelten Daten und/oder ermittelten Bauteilzustand und zum Steuern des Autoklaven-Fertigungsprozesses in Abhängigkeit von den aus dem Datenspeicher ermittelten Steuerungswerten eingerichtet ist.

## Claims

1. Method for controlling an autoclave manufacturing process for producing a fibre composite component in an autoclave (2) comprising
a) introduction of a component in an autoclave (2) and starting of the autoclave manufacturing process using prescribed control values of autoclave control parameters,
b1) acquisition of data relating to a plurality of process and/or component parameters of the manufacturing process and of the component, which is introduced in the autoclave (2), by way of a sensor system (3),
b2) ascertaining of data relating to at least one non-acquired process and/or component parameter of the component, which is introduced in the autoclave, by way of a numerical autoclave simulation, which obtains, as numerical input variables, data of at least some of the process and/or component parameters, which data are acquired by way of the sensor system, by means of a simulation unit (6),
c) ascertaining of a component state of the component, which is located in the autoclave (2), depending on a correlation of the data by way of a control unit (5), which is connected communicatively to the in the sensor system (3), and
d) control of the autoclave manufacturing process depending on the ascertained component state by way of the control unit (5).

2. Method according to one of the preceding claims, wherein, in step d), the autoclave manufacturing process is controlled by adjusting the control values of the autoclave control parameters depending on the ascertained component state.

3. Method according to either of the preceding claims, wherein data acquired and/or ascertained during the manufacturing process and the corresponding control values of the autoclave control parameters are saved in a data memory (7).

4. Method according to one of the preceding claims, wherein control values of the autoclave control parameters are ascertained from a plurality of control values, which are stored in a data memory, and corresponding acquired and/or ascertained data and/or ascertained component state depending on the acquired and/or ascertained data and/or ascertained component state and, in step d), the autoclave manufacturing process is controlled depending on the control values ascertained from the data memory.

5. Manufacturing installation (1) for producing a fibre composite component in an autoclave manufacturing process comprising
a) an autoclave (2), which is configured to receive a component and to carry out the autoclave manufacturing process using control values of autoclave control parameters,
b1) a sensor system (3), which is designed to acquire data relating to a plurality of process and/or component parameters of the manufacturing process and of the component, which is introduced in the autoclave, by means of sensors (4a, 4b),
b2) a simulation unit (6), which is configured to ascertain data relating to at least one non-acquired process and/or component parameter of the component, which is located in the autoclave, from a numerical autoclave simulation, which obtains, as numerical input variables, data of at least some of the process and/or component parameters, which data are acquired by way of the sensor system,
c) a control unit (5), which is connected communicatively to the sensor system (3), which control unit is configured to ascertain a component state of the component, which is located in the autoclave (2), depending on a correlation of the data and to control the autoclave manufacturing process depending on the ascertained component state.

6. Manufacturing installation (1) according to Claim 5, wherein the control unit (5) is configured to control the autoclave manufacturing process by adjusting the control values of the autoclave control parameters depending on the ascertained component state.

7. Manufacturing installation (1) according to either of Claims 5 and 6, wherein a data memory is provided, which data memory is configured to store the data, which are acquired and/or ascertained during the manufacturing process, by way of the control unit.

8. Manufacturing installation (1) according to one of Claims 5 to 7, wherein the control unit is configured to ascertain control values of the autoclave control parameters from a plurality of control values, which are stored in a data memory, and corresponding acquired and/or ascertained data and/or ascertained component state depending on the acquired and/or ascertained data and/or ascertained component state and to control the autoclave manufacturing process depending on the control values ascertained from the data memory.

## Revendications

1. Procédé de commande d'un processus de fabrication en autoclave pour la fabrication d'une pièce composite en fibres dans un autoclave (2) avec les opérations suivantes:
a) introduction d'une pièce dans un autoclave (2) et démarrage du processus de fabrication en autoclave avec des valeurs de commande prédéterminées de paramètres de commande d'autoclave,
b1) détection de données concernant une multiplicité de paramètres de processus et/ou de pièce du processus de fabrication et de la pièce introduite dans l'autoclave (2) au moyen d'un système de capteurs (3),
b2) détermination de données concernant au moins un paramètre de processus et/ou de pièce non détecté de la pièce introduite dans l'autoclave au moyen d'une simulation d'autoclave numérique, qui reçoit comme grandeurs d'entrée numériques des données détectées par le système de capteurs d'au moins une partie des paramètres de processus et/ou de pièce, au moyen d'une unité de simulation (6),
c) détermination d'un état de pièce de la pièce se trouvant dans l'autoclave (2) en fonction d'une corrélation des données au moyen d'une unité de commande (5) reliée en communication au dans le système de capteurs (3), et
d) commande du processus de fabrication en autoclave en fonction de l'état de pièce déterminé par l'unité de commande (5).

2. Procédé selon l'une quelconque des revendications précédentes, dans lequel on commande le processus de fabrication en autoclave à l'étape d. par adaptation des valeurs de commande des paramètres de commande d'autoclave en fonction de l'état de pièce déterminé.

3. Procédé selon l'une quelconque des revendications précédentes, dans lequel on mémorise des données détectées et/ou déterminées pendant le processus de fabrication ainsi que les valeurs de commande correspondantes des paramètres de commande d'autoclave dans une mémoire de données (7).

4. Procédé selon l'une quelconque des revendications précédentes, dans lequel on détermine des valeurs de commande des paramètres de commande d'autoclave à partir d'une multiplicité de valeurs de commande stockées dans une mémoire de données et de données correspondantes détectées et/ou déterminées et/ou d'un état de pièce déterminé en fonction des données détectées et/ou déterminées et/ou de l'état de pièce déterminé et on commande le processus de fabrication en autoclave à l'étape d. en fonction des valeurs de commande déterminées à partir de la mémoire de données.

5. Installation de fabrication (1) pour la fabrication d'une pièce composite en fibres dans un processus de fabrication en autoclave, avec
a) un autoclave (2), qui est conçu de façon à recevoir une pièce et exécuter le processus de fabrication en autoclave avec des valeurs de commande de paramètres de commande d'autoclave,
b1) un système de capteurs (3), qui est configuré de façon à détecter au moyen de capteurs (4a, 4b) des données concernant une multiplicité de paramètres de processus et/ou de pièce du processus de fabrication et de la pièce introduite dans l'autoclave, et
b2) une unité de simulation (6), qui est conçue de façon à déterminer des données concernant au moins un paramètre de processus et/ou de pièce non détecté de la pièce se trouvant dans l'autoclave à partir d'une simulation d'autoclave numérique, qui reçoit comme grandeurs d'entrée numériques des données détectées par le système de capteurs d'au moins une partie des paramètres de processus et/ou de pièce, et
c) une unité de commande (5) reliée en communication au système de capteurs (3), qui est conçue pour déterminer un état de pièce de la pièce se trouvant dans l'autoclave (2) en fonction d'une corrélation des données et pour commander le processus de fabrication en autoclave en fonction de l'état de pièce déterminé.

6. Installation de fabrication (1) selon la revendication 5, dans laquelle l'unité de commande (5) est conçue de façon à commander le processus de fabrication en autoclave par adaptation des valeurs de commande des paramètres de commande d'autoclave en fonction de l'état de pièce déterminé.

7. Installation de fabrication (1) selon une des revendications 5 ou 6, dans laquelle il est prévu une mémoire de données, qui est conçue de façon à stocker les données détectées et/ou déterminées pendant le processus de fabrication au moyen de l'unité de commande.

8. Installation de fabrication (1) selon l'une quelconque des revendications 5 à 7, dans laquelle l'unité de commande est conçue de façon à déterminer des valeurs de commande des paramètres de commande d'autoclave à partir d'une multiplicité de valeurs de commande stockées dans une mémoire de données et de données correspondantes détectées et/ou déterminées et/ou d'un état de pièce déterminé en fonction des données détectées et/ou déterminées et/ou de l'état de pièce déterminé et à commander le processus de fabrication en autoclave en fonction des valeurs de commande déterminées à partir de la mémoire de données.
